# EUROPEAN PATENT APPLICATION

(11) **EP 3 522 148 A1**
(43) Date of publication of application: **07.08.2019**
(21) Application number: 17855360.8
(22) Date of filing: 11.07.2017
(51) Int. Cl.: G09G 5/00, G02F 1/13, G02F 1/133, G09G 3/20, G09G 3/36, H04N 5/64

(54) **HEAD-MOUNTED DISPLAY**

(30) Priority: 28.09.2016 JP 2016189137
(71) Applicant: Brother Kogyo Kabushiki Kaisha, Nagoya-shi, Aichi 467-8561 (JP)
(72) Inventor: TAKAHASHI Hiromasa, Nagoya-shi Aichi 467-8561 (JP)
(74) Representative: J A Kemp
(86) International application number: PCT/JP2017/025243
(87) International publication number: WO 2018/061401

(57) **Abstract**

A head-mounted display provided with a field sequential display device and capable of suppressing occurrence of color breaking is provided. The head-mounted display includes a display device having a liquid crystal panel configured to display an image, a mounting fixture for mounting the display device on a head of a user, and an acceleration sensor configured to detect an acceleration acting on the display device. If the acceleration detected by the acceleration sensor is less than the first threshold value Th1 (S13: NO), a CPU of the head-mounted display displays an image on the liquid crystal panel in the field sequential method (S11). If the acceleration detected by the acceleration sensor is equal to or greater than the first threshold value Th1 (S13: YES), the CPU displays an image on the liquid crystal panel in an alternative method (S23).

## Description

### TECHNICAL FIELD

The present disclosures relate to ahead-mounted display provided with a field sequential display device.

### BACKGROUND ART

A field sequential display device is known. This system is a color display system in which time division color mixing is used. That is, this system makes use of the fact that, by continually switching emissions of red (R), green (G) and blue (B) lights while setting the switching speed to a speed that is greater than a time resolution of the human eye, the human recognizes the RGB colors while mixing them.

In the above-mentioned display device, it is known that there is a case where a displaying phenomenon called color breaking (it is also called "color breakup") occurs. The color breaking occurs when images of respective colors of RGB, which are sequentially displayed according to the lapse of time, do not properly mix due to complex factors such as a restriction on the optic nerve of the eyeball and image recognition feelings by the brain of the human. When the color breaking occurs, the images of respective colors of RGB are visually recognized as after images or the like, and can deteriorate visibility for the user. In this regard, techniques for suppressing the deterioration of the visibility due to the color breaking have been proposed (e.g., see Patent Document 1).

### PRIOR ART DOCUMENT

### PATENT DOCUMENTS

[Patent Document 1] Japanese Patent Provisional Publication No. 2003-58113

### SUMMARY OF THE INVENTION

### PROBLEM TO BE SOLVED

The color breaking tends to occur when the display device shakes. For example, if the field sequential display device is applied to a head-mounted display (HMD), shaking of the display device becomes greater than that of a stationary display device. For this reason, the color breaking is more likely to occur in the HMD, and therefore there is a problem that visibility of a user who wears the HMD deteriorates.

The present disclosures provide a head-mounted display provided with the field sequential display device and capable of suppressing the occurrence of the color breaking.

### MEANS FOR SOLVING THE PROBLEM

A head-mounted display according to the first aspect of the present disclosures includes a display part having a display element configured to display an image, a mounting part for mounting the display part on a head of a user, a first detecting means configured to detect a movement of the display part, a first control means configured to make the display element display the image in a field sequential method if an amount of the movement detected by the first detecting means is less than a predetermined first threshold value, and a second control means configured to make the display element display the image in an alternative method different from the field sequential method if the amount of the movement detected by the first detecting means is equal to or greater than the first threshold value.

In a case where an image is displayed on the display element in the field sequential (hereinafter, referred to as an "FS") method, the color breaking is likely to occur when the display part moves. In this regard, in the HMD, if the amount of the movement of the display part is less than the first threshold value, an image is displayed on the display element in the FS method, and if the amount of the movement of the display part is equal to or greater than the first threshold value, an image is displayed on the display element in the alternative method. Therefore, the HMD can control the displaying while taking advantage of features of the FS method (e.g., a resolution enhancement becomes possible) by displaying an image in the FS method when the color breaking is less likely to occur. On the other hand, the HMD can prevent the occurrence of the color breaking by displaying an image in the alternative method when the color breaking is likely to occur. It noted that the case where the color breaking is less likely to occur is, for example, when the amount of the movement of the display part is small. The case where the color breaking is likely to occur is, for example, when the amount of the movement of the display part is large. Accordingly, the HMD can suppress a degradation of a visibility for the user due to the occurrence of the color breaking.

In the first aspect, the head-mounted display may further include a second detecting means configured to detect a ratio of areas having black color among an entire area of the image displayed on the display element, and, if the amount of the movement detected by the first detecting means is equal to or greater than the first threshold value and the ratio detected by the second detecting means is equal to or greater than a predetermined second threshold value, the second control means may make the display element display the image in the alternative method. In a case where an image is displayed in the FS method, the color breaking is more likely to occur especially when the image is closer to a black-and-white image. Also, the greater the ratio of areas having black color to the entire area of the image is, the closer the image is to a black-and-white image. In this regard, in the HMD, if the amount of the movement of the display part is equal to or greater than the first threshold value and the ratio of black color is equal to or greater than the second threshold value, the image is displayed on the display element in the alternative method. By this configuration, since the HMD displays an image in the alternative method in a state where the color breaking is more likely to occur, the color breaking can be suppressed effectively.

In the first aspect, the head-mounted display may further include a third control means configured to make the display element display the image in the field sequential method if, after the image is displayed on the display element in the alternative method by the second control means, the ratio detected by the second detecting means becomes equal to or less than a third threshold value smaller than the second threshold value. After the ratio of black color became equal to or greater than the second threshold value, if the ratio of black color has decreased up to a value equal to or less than the third threshold value, the image is closer to a color image and therefore it is likely that the color breaking has become less likely to occur. Therefore, if the ratio of black color has become equal to or less than the third threshold value, the HMD displays the image on the display element in the FS method. By this configuration, the HMD can display an image in a high resolution in the FS method while preventing the occurrence of the color breaking. Also, the user needs not perform an operation for restoring the display method to the FS method after the display method is switched from the FS method to the alternative method. Therefore, the HMD can enhance the convenience for the user.

The head-mounted display may further include a third detecting means configured to detect a position of the display part with respect to the mounting part, and the second control means may specify one of the field sequential method and the alternative method based on the position detected by the third detecting means and make the display element display the image in the specified method. In this case, since an image is displayed on the display element based on the position of the display part, the color breaking can be suppressed while enhancing the convenience for the user. For example, let's assume that the displacement amount of the visual line when the user tries to visually recognize the display element of the display part located at the first position is greater than the displacement amount of the visual line when the display part is located at other positions. In this case, if an image is displayed in the FS method, the color breaking is likely to occur. In this regard, if the display part is located at the first position, the HMD switches the display method from the FS method to the alternative method, and displays an image in the alternative method. By this configuration, the HMD can effectively suppress the color breaking in the situation where the color breaking is likely to occur. Also, for example, let's assume that, when the display part is located at the second position, it is likely that the user is not viewing the display element of the display part. In this case, the HMD displays an image in the FS method. By this configuration, when becoming in a situation where the user visually recognizes the display element, the HMD can display an image in the FS method having good image quality and make the user visually recognize the image. Also, for example, let's assume that, when the display part is located at the second position, it is likely that the user is viewing the display element of the display part but the displacement amount of the visual line of the user is small. In this case, even if an image is displayed in the FS method, the color breaking is less likely to occur. Accordingly, by displaying an image in the FS method in such a case, the HMD can make the user visually recognize the image of high image quality while suppressing the occurrence of the color breaking.

In the first aspect, the head-mounted display may further include a fourth detecting means configured to detect a displacement amount of a visual line of the user, and if the displacement amount detected by the fourth detecting means is equal to or greater than a predetermined fourth threshold value, the second control means may make the display element display the image in the alternative method. If the displacement amount of the visual line of the user is large, the color breaking is likely to occur if an image is displayed in the FS method. In this regard, if the displacement amount of the visual line of the user is equal to or greater than the fourth threshold value, the HMD switches the display method from the FS method to the alternative method and displays an image in the alternative method. By this configuration, the HMD can effectively suppress the color breaking in the situation where the color breaking is likely to occur.

In the first aspect, the head-mounted display may further include a fifth control means configured to make the display element display the image in the field sequential method if, after the image is displayed on the display element in the alternative method by the second control means, the displacement amount detected by the fourth detecting means becomes less than a fifth threshold value smaller than the fourth threshold value. If the displacement amount of the visual line of the user is small, even when an image is displayed in the FS method, the color breaking is less likely to occur. Therefore, if the displacement amount of the visual line of the user becomes less than the fifth threshold value, the HMD displays an image on the display element in the FS method (S55). By this configuration, the HMD can display an image in a high resolution in the FS method while preventing the occurrence of the color breaking. Also, the user needs not perform an operation for restoring the display method to the FS method after the display method is switched from the FS method to the alternative method. Therefore, the HMD can enhance the convenience for the user.

In the first aspect, the field sequential method may be a method in which RGB lights are output while being switched in a time division, and the alternative method may be a method in which one of the RGB lights is output. By this configuration, the HMD can suppress the occurrence of the color breaking by displaying an image in the alternative method. Also, the HMD can suppress power consumption when displaying an image in the alternative method.

In the first aspect, the field sequential method may be a method in which the RGB lights are output while being switched in a time division, and the alternative method may be a method in which the RGB lights are output simultaneously. By this configuration, the HMD can suppress the occurrence of the color breaking by displaying an image in the alternative method. Also, if an image is displayed in the alternative method, since the HMD displays the original color image as a black-and-white image, a display mode of the original image can be maintained whenever possible.

A head-mounted display according to the second aspect of the present disclosures includes a display part having a display element configured to display an image, a mounting part for mounting the display part on a user, a first detecting means configured to detect a movement of the display part, a first control means configured to make the display element display the image in a first method if an amount of the movement detected by the first detecting means is less than a predetermined first threshold value, and a second control means configured to make the display element display the image in a second method different from the first method if the amount of the movement detected by the first detecting means is equal to or greater than the first threshold value. The first method is a method in which RGB lights are output while being switched in a time division in a first cycle, and the second method is a method in which the RGB lights are output while being switched in a time division in a second cycle shorter than the first cycle. According to the second aspect, effects similar to those of the first aspect can be obtained. Also, images of respective colors of RGB displayed in the FS method are similarly reproduced in an image displayed in the alternative method. Therefore, the HMD can appropriately reproduce a display mode of the original image even in the case where an image is displayed in the alternative method.

### BRIEF DESCRIPTION OF THE DRAWINGS

Fig. 1 is a perspective view of an HMD 1.
Fig. 2 is a schematic diagram showing an HD2 located at a viewing position (A), an intermediate position (B), and a non-viewing position (C).
Fig. 3 is a block diagram showing an electrical configuration of the HMD 1.
Fig. 4 shows timing charts for a field sequential method (A) and an alternative method (B).
Fig. 5 is a flow chart of a main process.
Fig. 6 is a flow chart of the main process and is a continuation of Fig. 5.
Fig. 7 shows timing charts for a field sequential method (A) and an alternative method (B) of the first modification.
Fig. 8 shows timing charts for a field sequential method (A) and an alternative method (B) of the second modification.
Fig. 9 is a schematic diagram showing the HD2 located at the viewing position (A), the intermediate position (B), and the non-viewing position (C).

### DESCRIPTION OF THE EMBODIMENTS

### <General Outline of HMD 1>

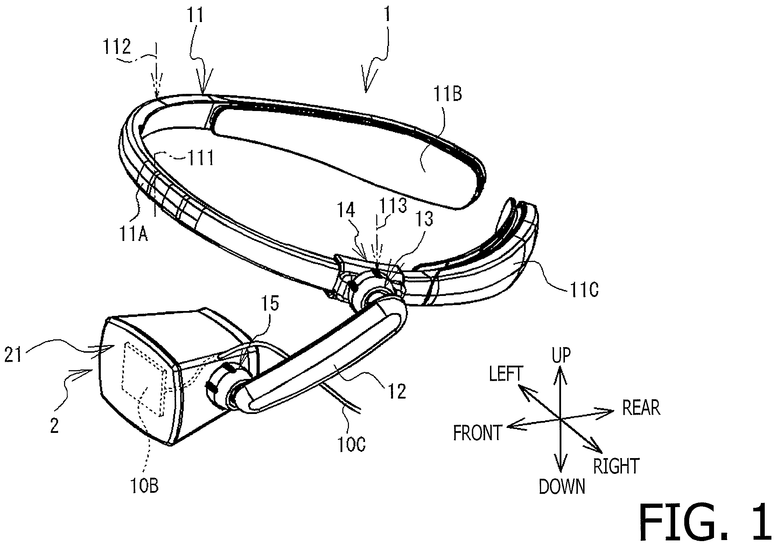

An embodiment of the present disclosures will be described. As shown Fig. 1, a head-mounted display (hereinafter, referred to as an "HMD") 1 is a video transmission type HMD. The HMD 1 includes a mounting fixture 11, a connection fixture 12 and a display device 2 (hereinafter, referred to as an "HD 2"). Hereinafter, in order to facilitate understanding the description of the drawings, an upper side, a lower side, a left side, a right side, a front side and a rear side of the HMD 1 will be defined. The upper side, the lower side, the left side, the right side, the front side and the rear side of the HMD 1 correspond, for example, to an upper side, a lower side, a diagonally upper left side, a diagonally lower right side, a left side and a right side of Fig. 1, respectively. The upper side, the lower side, the left side, the right side, the front side and the rear side of the HMD 1 correspond to an upper side, a lower side, a right side, a left side, a front side and a rear side of the user who wears the mounting fixture 11, respectively.

As shown in Fig. 1, the mounting fixture 11 is configured with flexible material such as resin or metal (e.g., stainless steel). The mounting fixture 11 has a first section 11A and second sections 11B and 11C. In the following description, in order to facilitate understanding, the mounting fixture 11 will be described by dividing the same into the first section 11A and the second sections 11B and 11C. However, the mounting fixture 11 is not separated into members of the first section 11A and the second sections 11B and 11C, but is an integral member as a whole.

Each of the first section 11A and the second sections 11B and 11C is a curved and elongated plate-shaped member. The first section 11A is a part of the mounting fixture 11 extending in the right-left direction between a position 112 and a position 113. The first section 11A is convexly curved forward. The position 112 is located on the left side with respect to the center 111 of the mounting fixture 11 in the right-left direction. The position 113 is located on the right side with respect to the center 111 of the mounting fixture 11 in the right-left direction. The second section 11B is a part of the mounting fixture 11 extending rearward from the position 112. The second section 11C is a part of the mounting fixture 11 extending rearward from the position 113. The second sections 11B and 11C extend in a direction where rear ends thereof approach each other. The mounting fixture 11 is worn on the head of the user in a state where the first section 11A and the second sections 11B and 11C contact a frontal region, a right temporal region and a left temporal region of the user, respectively.

The connection fixture 12 is a substantially rod-like member. The connection fixture 12 is configured with resin or metal. The connection fixture 12 extends in the up-down direction in the front view. An upper end of the connection fixture 12 is connected to the mounting fixture 11 through a ball joint 13 and a connection member 14. A lower end of the connection fixture 12 is connected to the HD 2 through a ball joint 15. In a state where the mounting fixture 11 is worn on the head of the user, die connection fixture 12 allows the HD 2 to be located in front of a left eye of the user.

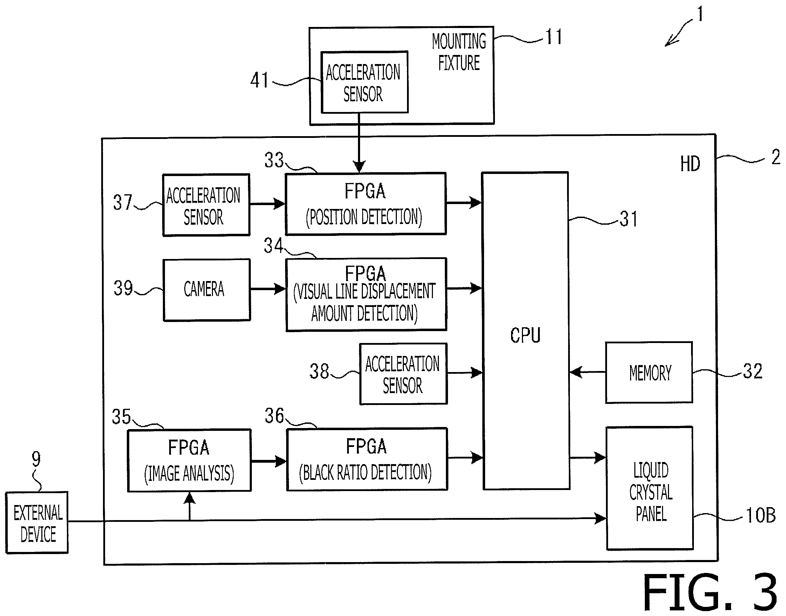

The HD 2 includes a chassis 21. The chassis 21 has a hollow box shape. An opening is provided on the rear end part of the chassis 21. The opening is covered with a transparent plate-shaped member. A liquid crystal panel 10B is accommodated inside the chassis 21. The liquid crystal panel 10B can switch its displaying method to either of two methods (a field sequential method (hereinafter, referred to as an "FS method") or an alternative method) which will be described later. The liquid crystal panel 10B is electrically connected to an external device 9 (see Fig. 3) through a cable 10C. The external device 9 is, for example, a control box which executes control for making the liquid crystal panel 10B display an image. The liquid crystal panel 10B displays an image on a displaying surface based on an image signal received from the external device 9 through the cable 10C. The displaying surface faces rearward. Image light of the image displayed on the displaying surface of the liquid crystal panel 10B is emitted rearward. The image light passes through the opening on the rear end part of the chassis 21 from the front side toward the rear side, and further passes through the transparent plate-shaped member toward the rear side. The image light is emitted toward the rear side of the chassis 21.

A specific example of usage of the HMD 1 will be described. The user fixes the mounting fixture 11 of the HMD 1 on his/her head. The user holds the connection fixture 12 and the HD 2 and adjusts positions thereof so that the opening on the rear end part of the HD 2 is located in front of the left eye to face the same. At this stage, the ball joints 13 and 15 enable the HD 2 to be located, with respect to the mounting fixture 11, at an appropriate position. Hereinafter, the position of the HD 2 when the opening on the rear end part of the HD 2 is located in front of the left eye to face the same will be referred to as a "viewing position."

A signal is output from the external device 9 to the liquid crystal panel 10B of the HD 2 through the cable 10C. An image is displayed on the displaying surface of the liquid crystal panel 10B. Image light of the displayed image is emitted rearward toward the opening of the chassis 21. The image light is emitted to the outside of the chassis 21 after passing through the opening rearward and further passing through the transparent plate-shaped member rearward. The emitted image light is incident on the left eye of the user when the HD 2 is located at the viewing position. The user thereby recognizes the image.

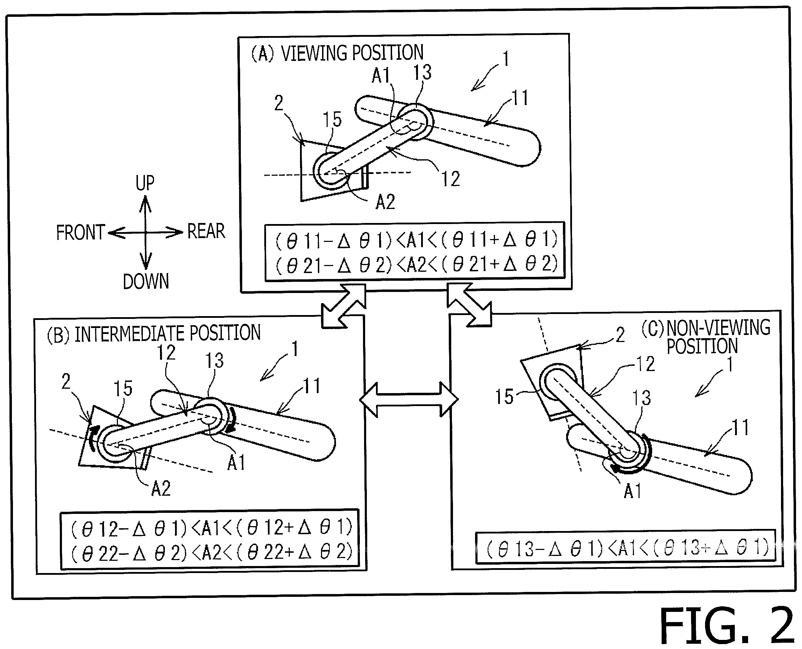

As shown in Fig. 2(A), in a state where the HD 2 is located at the viewing position, the connection fixture 12 extends downward from the mounting fixture 11. When the HMD 1 is viewed from the right side, an obtuse angle between respective extending directions of the mounting fixture 11 and the connection fixture 12 (hereinafter, referred to as a "first angle A1") takes one of the values within a range of angles when the connection fixture 12 is rotated in both rotating directions (clockwise direction and anti-clockwise direction) by a predetermined range Δ*θ*1 with a predetermined angle *θ*11 at the center ((θ11 - Δθ1) < A1 < (θ11 + Δθ1)). An acute angle between respective extending directions of the connection fixture 12 and an image light emitting direction (hereinafter, referred to as a "second angle A2") takes one of the values within a range of angles when the HD 2 is rotated in both rotating directions by a predetermined range Δ*θ2* with a predetermined angle *θ*21 at the center ((θ21 - Δθ2) < A2 < (θ21 + Δθ2)). That is, when the first angle A1 satisfies the above-described condition ((θ11 - Δθ1) < A1 < (θ11 + Δθ1), which will be hereinafter referred to as a "first condition") and the second angle A2 satisfies the above-described condition ((θ21 - Δθ2) < A2 < (θ21 + Δθ2), which will be hereinafter referred to as a "second condition"), the image light emitted from the HD 2 can be incident on and can be visually recognized by the left eye of the user. Further, positions of the HD 2 of which the first angle A1 and the second angle A2 satisfy the above-described conditions correspond to the viewing position.

It is noted that, hereinafter, when rotating directions are described, unless otherwise specified, rotating directions (clockwise direction or anti-clockwise direction) are defined on the premise that the HMD 1 is viewed from the right side.

On the other hand, there is a case where the user uses the HMD 1 while locating the HD 2 such that both an image displayed on the liquid crystal panel 10B of the HD 2 and a scenery in front of the eyes of the user can be visually recognized. Hereinafter, a position of the HD 2 when the HMD 1 is used in such a state will be referred to as an "intermediate position." As shown in Fig. 2(B), the user displaces the HD 2 to the intermediate position by rotating the connection fixture 12 and the HD 2 from the viewing position in the clockwise direction. In a state where the HD 2 is located at the intermediate position, the connection fixture 12 extends downward from the mounting fixture 11. The first angle A1 takes one of the values within a range of angles when the connection fixture 12 is rotated in both rotating directions by a range Δ*θ*1 with a predetermined angle *θ*12, which is greater than the angle *θ*11 (*θ*11 < *θ*12), at the center ((θ12 - Δθ1) < A1 < (θ12 + Δθ1)). The second angle A2 takes one of the values within a range of angles when the HD 2 is rotated in both rotating directions by a range Δ*θ*2 with a predetermined angle *θ*22, which is smaller than the angle *θ*21 (*θ*21 > *θ*22), at the center ((θ22 - Δθ2) < A2 < (θ22 + Δθ2)). That is, when the first angle A1 satisfies the above-described condition (((θ12 - Δθ1) < A1 < (θ12 + Δθ1), which will be hereinafter referred to as a "third condition") and the second angle A2 satisfies the above-described condition ((θ22 - Δθ2) < A2 < (θ22 + Δθ2), which will be hereinafter referred to as a "fourth condition"), the user can visually recognize both the image displayed on the liquid crystal panel 10B of the HD 2 and the scenery in front of the eyes of the user. Further, positions of the HD 2 of which the first angle A1 and the second angle A2 satisfy the above-described conditions correspond to the intermediate position.

On the other hand, there is a case where the user uses the HMD 1 while locating the HD 2 out of the user's view such that the scenery in front of the eyes of the user can be visually recognized well. Hereinafter, a position of the HD 2 when the HMD 1 is used in such a state will be referred to as a "non-viewing position." As shown in Fig. 2(C), the user displaces the HD 2 to the non-viewing position by rotating the connection fixture 12 from the viewing position in the clockwise direction. In a state where the HD 2 is located at the non-viewing position, the connection fixture 12 extends upward from the mounting fixture 11. The first angle A1 takes one of the values within a range of angles when the connection fixture 12 is rotated in both rotating directions by a range Δ*θ*1 with a predetermined angle *θ*13, which is greater than the angles *θ*11 and *θ*12 (*θ*11 < *θ*12 < *θ*13), at the center ((θ13 - Δθ1) < A1 < (θ13 + Δθ1)). That is, when the first angle A1 satisfies the above-described condition (((θ13 - Δθ1) < A1 < (θ13 + Δθ1), which will be hereinafter referred to as a "fifth condition"), the user can visually recognize the scenery in front of the eyes of the user while suppressing the HD 2 from entering the user's view. Further, positions of the HD 2 of which the first angle A1 satisfies the above-described condition correspond to the non-viewing position.

### <Electrical Configurations of HMD 1>

Electrical configurations of the HMD 1 (the mounting fixture 11 and the HD 2) will be described with reference to Fig. 3. The mounting fixture 11 includes an acceleration sensor 41. The acceleration sensor 41 is electrically connected to an FPGA33 (which will be described later) of the HD2. The acceleration sensor 41 detects accelerations respectively acting on the mounting fixture 11 in three axis directions (an X-axis direction, a Y axis direction and a Z-axis direction). The acceleration sensor 41 outputs signals indicating the detected accelerations to the FPGA 33.

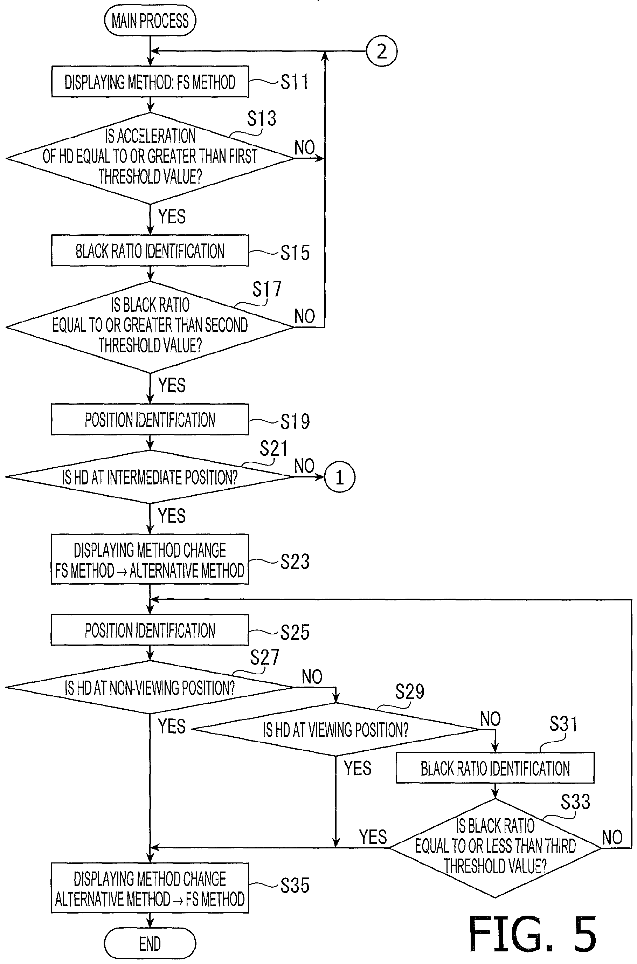

The HD2 has a CPU 31, a memory 32, a liquid crystal panel 10B, FPGAs 33-36, acceleration sensors 37 and 38, and a camera 39. The CPU 31 controls the entire HMD 1. The memory 32, the liquid crystal panel 10B, the FPGAs 33, 34 and 36, and the acceleration sensor 38 are electrically connected to the CPU 31. The acceleration sensor 37 is electrically connected to the FPGA 33. The camera 39 is electrically connected to the FPGA 34. The FPGA 35 is electrically connected to the FPGA 36. To the memory 32, a program of a main process (see Fig. 5) to be executed by the CPU 31, various parameters and the like are stored. It is noted that the HMD 1 may have one FPGA, having all the functions of the FPGAs 33-36, in place of the FPGAs 33-36.

The acceleration sensor 37 detects accelerations respectively acting on the HD 2 in the three axis directions. The acceleration sensor 37 outputs signals indicating the detected accelerations to the FPGA 33. The FPGA 33 is a programmable logic device (hereinafter, referred to as a "PLD") including a function for detecting a position of the HD 2 with respect to the mounting fixture 11. The FPGA 33 identifies an acceleration acting on the HD 2 based on the signals output from the acceleration sensor. The FPGA 33 identifies an acceleration acting on the mounting fixture 11 based on the signals output from the acceleration sensor 41. The FPGA 33 detects the position of the HD 2 with respect to the mounting fixture 11 by calculating a difference between the acceleration of the HD 2 and the acceleration of the mounting fixture 11. The FPGA 33 outputs a signal indicating the detected position of the HD 2 to the CPU 31.

The camera 39 is provided on the rear end part of the chassis 21 (see Fig. 1) of the display device 2, and is capable of photographing a rear side of the chassis 21. The camera 39 outputs data of a photographed image to the FPGA 34. The FPGA 34 is a PLD including a function of detecting a visual line direction of the user. A method of identifying the visual line direction by the FPGA 34 is as follows. The FPGA 34 identifies, from an image based on the data output from the camera 39, an inner corner of the eye of the user as a reference point, and an iris of the eye of the user as a moving point. The FPGA 34 identifies the visual line direction of the user from a position of the iris with respect to the identified position of the inner corner of the eye. The FPGA 34 further detects a displacement amount of the visual line based on a chronological change of the identified visual line direction. The FPGA 34 outputs a signal indicating the detected displacement amount of the visual line to the CPU 31.

Similarly to the acceleration sensor 37, the acceleration sensor 38 detects the accelerations respectively acting on the HD 2 in the three axis directions. The acceleration sensor 38 outputs signals indicating the detected accelerations to the CPU 31.

The FPGA 35 is a PLD having a function of analyzing colors of pixels. The FPGA 35 detects, through the cable 10C, an image signal sent from the external device 9. The FPGA 35 analyses a color of each of a plurality of pixels configuring an image based on the detected signal. The FPGA 35 outputs a signal indicating an analysis result to the FPGA 36. The FPGA 36 is a PLD having a function of detecting a ratio of areas having a specific color among the entire area of an image. The FPGA 36 detects a ratio of areas having black color among the entire area of an image to be displayed on the liquid crystal panel 10B based on the signal output from the FPGA 35. The FPGA 36 outputs a signal indicating the detected ratio to the CPU 31.

The liquid crystal panel 10B switches a displaying method to one of two methods (the FS method or the alternative method) based on the signal output from the CPU 31. The liquid crystal panel 10B displays an image on the displaying surface, with a displaying method according to the signal output from the CPU 31, based on the image signal output from the external device 9.

### <Displaying Methods (FS Method and Alternative method)>

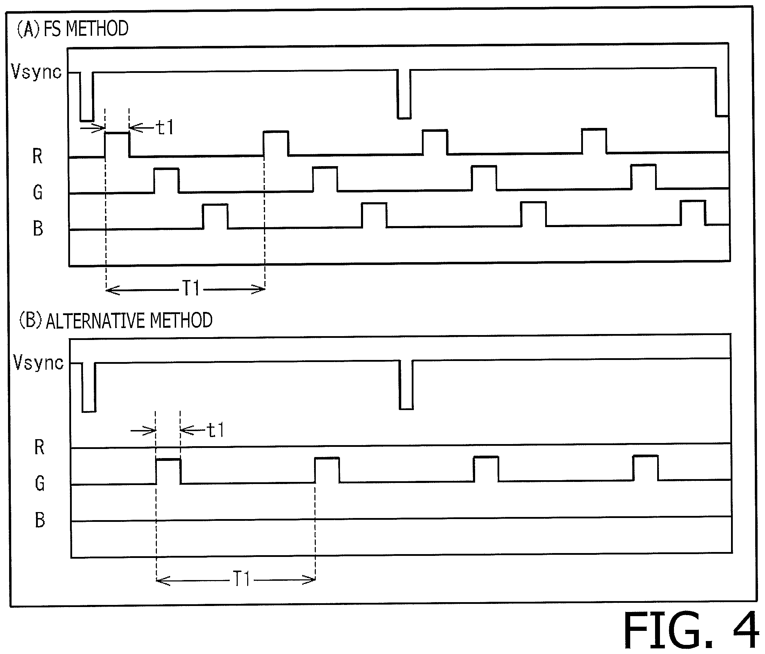

Two displaying method in which the liquid crystal panel 10B of the HD 2 can display will be described with reference to Fig. 4. The first method is the FS method. The FS method is a method which makes the user recognize a color image by outputting lights of red (R), green (G) and blue (B) while switching them in a time division. Fig. 4(A) illustrates a timing chart of a vertical synchronizing signal (Vsync) and respective output signals of RGB lights, in a case where a white image is displayed on the liquid crystal panel 10B in the FS method. As shown in Fig. 4(A), in the FS method, the RGB lights are output synchronously with the vertical synchronizing signal (Vsync) while switching the RGB lights in a first cycle T1. It is noted that the RGB lights are arranged with time lag such that the RGB lights are output at different timings. An output duration of light at each timing is t1.

The second method is the alternative method. The alternative method is a method which makes the user recognize an image by outputting one of the RGB lights which are output in the FS method at the same timing as the FS method. Fig .4(B) illustrates a timing chart of a vertical synchronizing signal (Vsync) and output respective signals of the RGB lights, in a case where the FS method shown in Fig. 4(A) is switched to the alternative method in which only the green (G) light is output. As shown in Fig. 4(B), in the alternative method, one of the RGB lights (in the case shown in Fig. 4(B), the B light) is output in the first cycle T1. In this case, the white image in the FS method (Fig. 4(A)) is converted to a monochromatic (green) image by switching to the alternative method. The output duration t1 of light at each timing is the same as that in the FS method.

### <Main Process>

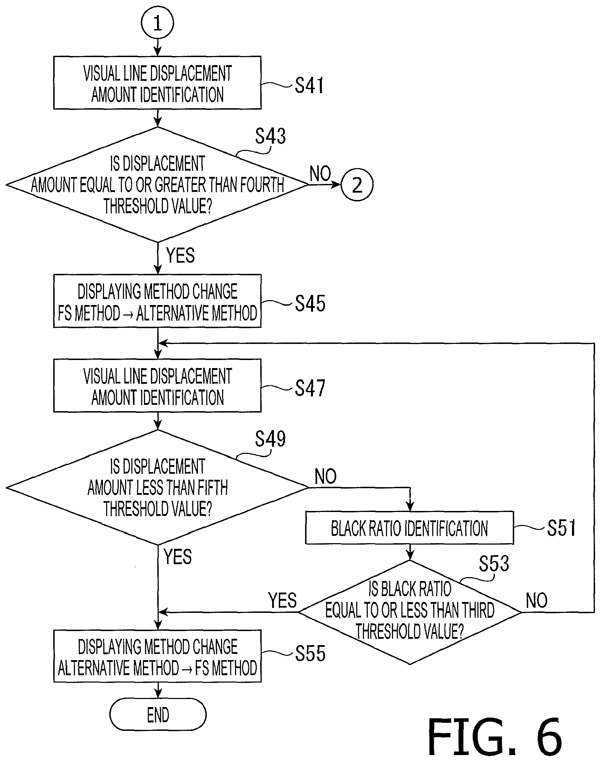

The main process to be executed by the CPU 31 will be described with reference to Fig. 5 and Fig. 6. The main process starts by the CPU 31 executing the program stored in the memory 32 when output of the image signal from the external device 9 is started. As Shown in Fig. 5, the CPU 31 outputs, to the liquid crystal panel 10B, a signal for making the liquid crystal panel 10B to display an image in the FS method (S11). The liquid crystal panel 10B displays an image on the displaying surface in the FS method based on the signal output from the external device 9.

The CPU 31 identifies the acceleration acting on the HD 2 based on the signals output from the acceleration sensor 38. The CPU 31 determines whether the identified acceleration is equal to or greater than a predetermined first threshold value Th1 or not (S13). If it is determined that the acceleration acting on the HD 2 is less than the first threshold value Th1 (S13: NO), the CPU 31 returns to the process S11. The CPU 31 continues to output, to the liquid crystal panel 10B, the signal for making the liquid crystal panel 10B to display an image in the FS method (S11). Therefore, on the liquid crystal panel 10B, when the acceleration acting on the HD 2 is less than the first threshold value Th1, an image is displayed in the FS method. On the other hand, when it is determined that the acceleration acting on the HD 2 is equal to or greater than the first threshold value Th1 (S13: YES), the CPU 31 proceeds to process S15.

The CPU 31 identifies a ratio of areas having black color among the entire area of an image displayed on the liquid crystal panel 10B based on the signal output from die FPGA 36 (S15). The CPU 31 determines whether the identified ratio is equal to or greater than a predetermined threshold value Th2 or not (S17). If it is determined that the ratio of areas having black color is less than the second threshold value Th2 (S17: NO), the CPU 31 returns to the process S11. Therefore, on the liquid crystal panel 10B, when the ratio of areas having black color among the entire area of the image is less than the second threshold value Th2, the image is displayed in the FS method. On the other hand, when it is determined that the ratio of areas having black color is equal to or greater than the second threshold value Th2 (S17: YES), the CPU 31 proceeds to process S19.

The CPU 31 identifies the position of the HD 2 with respect to the mounting fixture 11 based on the signal output from the FPGA 33 (S19). The CPU 31 determines whether the HD 2 is located at the intermediate position (See Fig. 2(B).) or not based on the identified position of the HD 2 (S21). If the HD 2 is located at a position that satisfies the third condition and the fourth condition (See Fig. 2(B).), The CPU 31 determines that the HD 2 is located at the intermediate position (S21: YES). In this case, the CPU 31 outputs, to the liquid crystal panel 10B, a signal for making the liquid crystal panel 10B to display an image in the alternative method (S23). The displaying method of the liquid crystal panel 10B changes from the FS method to the alternative method. The liquid crystal panel 10B displays an image on the displaying surface in the alternative method based on the signal output from the external device 9. The CPU 31 proceeds to process S25.

The CPU 31 identifies the position of the HD 2 with respect to the mounting fixture 11 based on the signal output from the FPGA 33 (S25). The CPU 31 determines whether the HD 2 is located at the non-viewing position (See Fig. 2(C).) or not based on the identified position of the HD 2 (S27). If the HD 2 is located at a position that satisfies the fifth condition (See Fig. 2(C).), the CPU 31 determines that the HD 2 is located at the non-viewing position (S27: YES). In this case, the CPU 31 specifies the displaying method of the liquid crystal panel 10B as the FS method, and proceeds to process S35. On the other hand, if the HD 2 is not located at a position that satisfies the fifth condition and it is determined that the HD 2 is not located at the non-viewing position (S27: NO), the CPU 31 proceeds to process S29. The CPU 31 determines whether the HD 2 is located at the viewing position (See Fig. 2(A).) or not (S29). If the HD 2 is located at a position that satisfies the first condition and the second condition (See Fig. 2(A).), the CPU 31 determines that the HD 2 is located at the viewing position (S29: YES). In this case, the CPU 31 specifies the displaying method of the liquid crystal panel 10B as the FS method, and proceeds to process S35.

If it is determined that the HD 2 is located at the non-viewing position or the viewing position, the CPU 31 outputs, to the liquid crystal panel 10B, the signal for making the liquid crystal panel 10B to display an image in the FS method (S35). The displaying method of the liquid crystal panel 10B changes from the alternative method to the FS method. The liquid crystal panel 10B displays an image on the displaying surface in the FS method based on the signal output from the external device 9. The CPU 31 terminates the main process.

If it is determined that the HD 2 is not located at the viewing position (S29: NO), the CPU 31 identifies the ratio of areas having black color among the entire area of an image displayed on the liquid crystal panel 10B based on the signal output from the FPGA 36 (S31). The CPU 31 determines whether the identified ratio is equal to or less than a predetermined third threshold value Th3 smaller than the second threshold value Th2 (Th2 > Th3) or not (S33). If it is determined that the ratio of areas having black color is greater than the third threshold value (S33: NO), the CPU 31 specifies the displaying method of the liquid crystal panel 10B as the alternative method, and returns to the process S25. In this case, the liquid crystal panel 10B continues to display the image in the alternative method. The CPU 31 repeats the processes S25-S33.

If it is determined that the ratio of areas having black color is equal to or less than the third threshold value Th3 (S33: YES), the CPU 31 proceeds to process S35. The CPU 31 outputs, to the liquid crystal panel 10B, the signal for making the liquid crystal panel 10B to display an image in the FS method (S35). The displaying method of the liquid crystal panel 10B changes from the alternative method to the FS method. The liquid crystal panel 10B displays the image on the displaying surface in the FS method based on the signal output from the external device 9. The CPU 31 terminates the main process.

On the other hand, if the HD 2 is not located at aposition that satisfies the third condition and the fourth condition (See Fig. 2(B).) and it is determined that the HD 2 is not located at the intermediate position (S21: NO), the CPU 31 proceeds to process S41 (See Fig. 6.). As shown in Fig. 6, the CPU 31 identifies the displacement amount of the visual line of the user based on the signal output from the FPGA 34 (S41). The CPU 31 determines whether the identified displacement amount of the visual line is equal to or greater than a predetermined fourth threshold value Th4 (S43). If it is determined that the displacement amount of the visual line is less than the fourth threshold value Th4 (S43: NO), the CPU 31 returns to the process S11 (See Fig. 5.). In this case, the liquid crystal panel 10B continues to display an image in the FS method (See S11.).

If it is determined that the displacement amount of the visual line is equal to or greater than the fourth threshold value Th4 (S43: YES), the CPU 31 outputs, to the liquid crystal panel 10B, the signal for making the liquid crystal panel 10B to display an image in the alternative method (S45). The displaying method of the liquid crystal panel 10B changes from the FS method to the alternative method. The liquid crystal panel 10B displays an image on the displaying surface in the alternative method based on the signal output from the external device 9. The CPU 31 proceeds to process S47.

The CPU 31 identifies the displacement amount of the visual line of the user based on the signal output from the FPGA 34 (S47). The CPU 31 determines whether the identified displacement amount of the visual line is less than a predetermined fifth threshold value Th5 smaller than the fourth threshold value Th4 (Th4 > Th5) or not (S49). If it is determined that the displacement amount of the visual line is less than the fifth threshold value Th5 (S49: YES), die CPU 31 proceeds to the process S55. The CPU 31 outputs, to the liquid crystal panel 10B, the signal for making the liquid crystal panel 10B to display an image in the FS method (S55). The displaying method of the liquid crystal panel 10B changes from the alternative method to the FS method. The liquid crystal panel 10B displays an image on the displaying surface in the FS method based on the signal output from the external device 9. The CPU 31 terminates the main process.

If it is determined that the displacement amount of the visual line is equal to or greater than the fifth threshold value Th5 (S49: NO), the CPU 31 proceeds to process S51. The CPU 31 identifies the ratio of areas having black color among the entire area of an image displayed on the liquid crystal panel 10B based on the signal output from the FPGA 36 (S51). The CPU 31 determines whether the identified ratio is equal to or less than the third threshold value Th3 or not (S53). If it is determined that the ratio of areas having black color is greater than the third threshold value Th3 (S53: NO), the CPU 31 returns to the process S47. In this case, the liquid crystal panel 10B continues to display the image in the alternative method. The CPU 31 repeats the processes S49-S53.

If it is determined that the ratio of areas having black color is equal to or less than the third threshold value Th3 (S53: YES), the CPU 31 proceeds to process S55. The CPU 31 outputs, to the liquid crystal panel 10B, the signal for making the liquid crystal panel 10B to display an image in the FS method (S55). The displaying method of the liquid crystal panel 10B changes from the alternative method to the FS method. The liquid crystal panel 10B displays the image on the displaying surface in the FS method based on the signal output from the external device 9. The CPU 31 terminates the main process.

### <Major Effects of Present Embodiment>

In a case where an image is displayed on the liquid crystal panel 10B in the FS method, the color breaking is likely to occur when the display device 2 moves. On the other hand, if an image is displayed on the liquid crystal panel 10B in the alternative method, the color breaking does not occur even when the display device 2 moves. In this regard, in the HMD 1, if the acceleration acting on the display device 2 is less than the first threshold value Th1 (S13: NO), an image is displayed on the liquid crystal panel 10B in the FS method (S11), and if the acceleration acting on the display device 2 is equal to or greater than the first threshold value Th1 (S13: YES), an image is displayed on the liquid crystal panel 10B in the alternative method (S23, S45). Therefore, the HMD 1 can control the displaying while taking advantage of features of the FS method (e.g., a resolution enhancement becomes possible) by displaying an image on the liquid crystal panel 10B in the FS method when the color breaking is less likely to occur. On the other hand, the HMD 1 can prevent the occurrence of the color breaking by displaying an image on the liquid crystal panel 10B in the alternative method when the color breaking is likely to occur. Accordingly, the HMD 1 can suppress a degradation of a visibility for the user due to the occurrence of the color breaking. It is noted that the case where the color breaking is less likely to occur is, for example, when the acceleration acting on the display device 2 is small. The case where the color breaking is likely to occur is, for example, when the acceleration acting on the display device 2 is large.

In a case where an image is displayed on the liquid crystal panel 10B in the FS method, the color breaking is more likely to occur especially when the image is closer to a black-and-white image. It is noted that, if the ratio of areas having black color to the entire area of the image is equal to or greater than the second threshold value, the image is close to a black-and-white image. In this regard, in the HMD 1, if the acceleration action on the display device 2 is equal to or greater than the first threshold value Th1 (S13: YES) and the ratio of black color is equal to or greater than the second threshold value Th2 (S17: YES), the image is displayed on the liquid crystal panel 10B in the alternative method (S23). By this configuration, since the HMD 1 displays an image on the liquid crystal panel 10B in the alternative method in a state where the color breaking is more likely to occur, the color breaking can be suppressed effectively.

After the ratio of black color became equal to or greater than the second threshold value Th2 (S17: YES), if the ratio of black color has decreased up to a value equal to or less than the third threshold value Th3 (S33: YES), the image has changed to the one closer to a color image and therefore it is likely that the color breaking has become less likely to occur. Therefore, if the ratio of black color has become equal to or less than the third threshold value Th3 (S33: YES), the HMD 1 displays the image on the liquid crystal panel 10B in the FS method (S35). By this configuration, the HMD 1 can display an image in a high resolution in the FS method while preventing the occurrence of the color breaking. Also, the user needs not manually perform an operation for restoring the display method to the FS method after the display method is switched from the FS method to the alternative method. Therefore, the HMD 1 can enhance the convenience for the user. It is noted that, by setting the third threshold value Th3 to be smaller than the second threshold value Th2, the HMD 1 can suppress the display method of the liquid crystal panel 10B from restoring from the alternative method to the FS method immediately after the display method has switched from the FS method to the alternative method.

When the HD 2 is located at the intermediate position, it is likely that the user is intending to visually recognize both an image displayed on the liquid crystal panel 10B and a scenery in front of the eyes of the user. In this case, since the user will move his/her eye to visually recognize both of them, the displacement amount of the visual line will become greater. It is noted that, if an image is displayed in the FS method, the color breaking becomes more likely to occur as the displacement amount of the visual line becomes greater. In this regard, if the HD 2 is located at the intermediate position (S21: YES), the HMD 1 switches the display method of the liquid crystal panel 10B from the FS method to the alternative method, and displays an image in the alternative method (S23). By this configuration, the HMD 1 can effectively suppress the color breaking in the situation where the color breaking is likely to occur.

When the HD 2 is located at the non-viewing position, it is likely that the user is not viewing an image displayed on the liquid crystal panel 10B. Therefore, if the HD 2 is located at the non-viewing position (S27: YES), the HMD 1 displays an image on the liquid crystal panel 10B in the FS method (S35). By this configuration, if, for example, the location of the HD 2 is changed from the non-viewing position to the viewing position, thereby becoming in a situation where the user visually recognizes an image displayed on the liquid crystal panel 10B again, since the liquid crystal panel 10B is in a state where an image is displayed in the FS method, the HMD 1 can make the user visually recognize an image of high image quality.

When the HD 2 is located at the viewing position, since it is likely that the user is directly viewing an image displayed on the liquid crystal panel 10B, it is likely that the displacement amount of the visual line of the user is small. Therefore, even if an image is displayed on the liquid crystal panel 10B in the FS method, the color breaking is less likely to occur. Accordingly, if the HD 2 is located at the viewing position (S29: YES), the HMD 1 displays an image in the FS method (35). By this configuration, the HMD 1 can make the user visually recognize an image of high image quality in the situation where the color breaking is less likely to occur.

When an image is displayed on the liquid crystal panel 10B in the FS method, the color breaking is likely to occur if the displacement amount of the visual line of the user is large. In this regard, in the HMD 1, if the displacement amount of the visual line is equal to or greater than the fourth threshold value Th4 (S43: YES), an image is displayed on the liquid crystal panel 10B in the alternative method (S45). By this configuration, the HMD 1 can effectively suppress the color breaking in the situation where the color breaking is likely to occur.

On the other hand, even when an image is displayed on the liquid crystal panel 10B in the FS method, if the displacement amount of the visual line is small, the color breaking is less likely to occur. Therefore, when the displacement amount of the visual line is less than the fifth threshold value Th5 (S49: YES), the HMD 1 displays an image in the FS method (S55). By this configuration, the HMD 1 can make the user visually recognize an image of high image quality in the situation where the color breaking is less likely to occur. It is noted that, by setting the fifth threshold value Th5 to be smaller than the fourth threshold value Th4, the HMD 1 can suppress the display method of the liquid crystal panel 10B from restoring from the alternative method to the FS method immediately after the display method has switched from the FS method to the alternative method.

The FS method is a method which makes the user visually recognize a color image by outputting the RGB lights while switching them in a time division. On the other hand, the alternative method is a method in which, by outputting one of the RGB lights which are output in the FS method at the same timing as the FS method, the user visually recognizes a monochromatic image. It is noted that the color breaking occurs when images of respective colors of RGB are visually recognized as after images or the like. Accordingly, since the HMD 1 makes the user visually recognize a monochromatic image by displaying an image on the liquid crystal panel 10B in the alternative method, the occurrence of the color breaking can be suppressed. Also, the HMD 1 can suppress a total output amount of the lights by displaying an image on the liquid crystal panel 10B in the alternative method. Therefore, the HMD 1 can suppress power consumption as compared to the case where an image is displayed on the liquid crystal panel 10B in the FS method by displaying an image on the liquid crystal panel 10B in the alternative method.

### <First Variation>

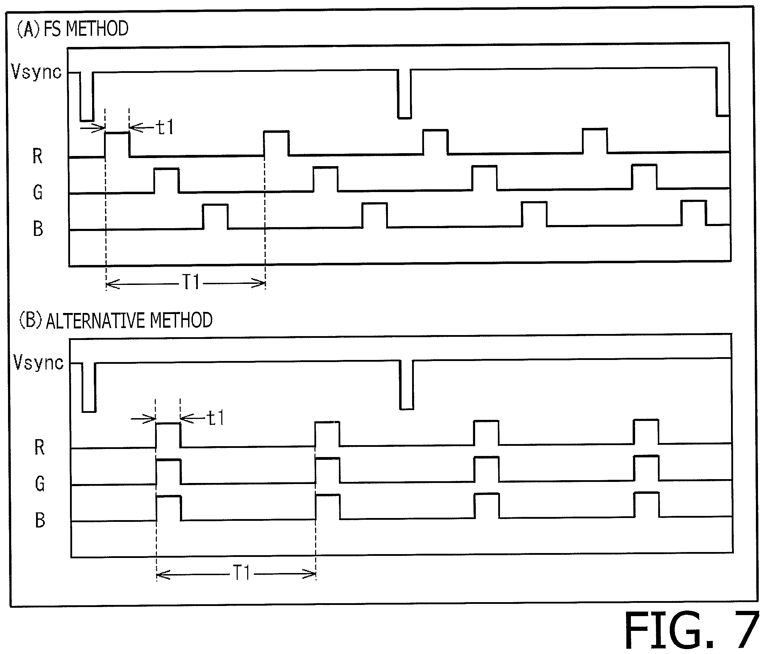

The alternative method in the above-described embodiment may be changed to other methods. As shown in Fig. 7, the alternative method of the first variation is a method which makes the user visually recognize an image by outputting all the RGB lights at the same timing. Fig. 7(B) illustrates a timing chart of a vertical synchronizing signal (Vsync) and output respective signals of the RGB lights in a case where the FS method shown in Fig. 7(A) is switched to the alternative method. As shown in Fig. 7(B), in the alternative method of the first variation, all the RGB lights are output synchronously in the first cycle T1. In this case, images in the FS method of Fig. (7), having colors other than white (e.g., the RGB colors), are all converted to white images by switching to the alternative method. The output duration t1 of light at each timing is the same as that in the FS method.

The HMD 1 can suppress the occurrence of the color breaking by displaying an image on the liquid crystal panel 10B in the alternative method. This is because, the color breaking occurs due to the RGB lights being output at different timings, whereas, in the alternative method, the RGB lights are output at the same timing. Also, if an image is displayed on the liquid crystal panel 10B in the alternative method, images of respective colors of RGB in the FS method are all displayed as white images. That is, the original color image is converted to a black-and-white image as the FS method is switched to the alternative method. In contrast, in the above-described embodiment, an image in the FS method is converted to a monochromatic image (See Fig. 4.). Therefore, the HMD 1 can display an image on the liquid crystal panel 10B while maintaining a display mode of the original image whenever possible as compared to the alternative method of the above-described embodiment.

### <Second Variation>

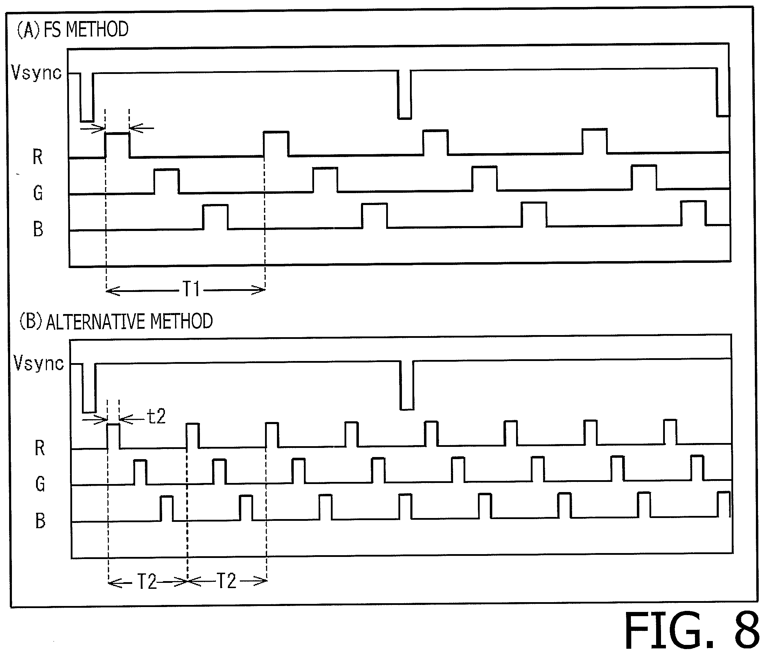

As shown in Fig. 8, the alternative method of the second variation is a method which makes the user visually recognize an image by outputting the RGB lights while switching them in a second cycle T2 which is half the first cycle T1. Fig. 8(B) illustrates a timing chart of a vertical synchronizing signal (Vsync) and respective output signals of the RGB lights in a case where the FS method shown in Fig. 8(A) is switched to the alternative method. As with the FS method, the RGB lights are arranged with time lag such that the RGB lights are output at different timings. Also, in the alternative method, an output duration t2 of the light is one half of the output duration t1 of the FS method. That is, in the alternative method, the number of outputs of each of the RGB lights becomes twice the number of that in the FS method (first cycle T1 → second cycle T2), and the output duration of light becomes one half of that in the FS method (output duration t1 → output duration t2). Therefore, the total of respective output durations of the RGB lights becomes the same as that in the case of the FS method.

The HMD 1 can suppress the occurrence of the color breaking by displaying an image on the liquid crystal panel 10B in the alternative method. This is because the color breaking is caused by images of respective colors of RGB not being well mixed when they are visually recognized by the user, whereas, by displaying in the alternative method, the RGB lights are output while being switched in the second cycle T2 being shorter than that of the FS method, and therefore is more likely that the RGB lights are properly mixed by the afterimage effect. Furthermore, the images of respective colors of RGB in the FS method are similarly reproduced in the image displayed in the alternative method. Therefore, the HMD 1 can appropriately reproduce a display mode of the original image even in the case where the image is displayed on the liquid crystal panel 10B in the alternative method.

### <Other Variations>

The present disclosures are not limited to the above-described embodiment, and various modifications are possible. The CPU 31 identifies the acceleration acting on the HD 2 based on the signals output from the acceleration sensor 38. However, the CPU 31 may identify the accelerations respectively acting on the mounting fixture 11 and the HD 2 based on the signals output from the acceleration sensor 41 provided to the mounting fixture 11 and the signals output from the acceleration sensor 38 provided to the HD 2. The CPU 31 may calculate an acceleration of a relative movement of the HD 2 with respect to the mounting fixture 11 from the identified respective accelerations of the HD 2 and the mounting fixture 11. If the calculated acceleration is less than the first threshold value Th1 (S13: NO), the CPU 31 may display an image on the liquid crystal panel 10B in the FS method. On the other hand, if the calculated acceleration is equal to or greater than the first threshold value Th1 (S13: YES), the CPU 31 may display an image on the liquid crystal panel 10B in the alternative method (S23).

The FPGA 36 may detect whether an image is a black-and-white image or a color image based on the signal output from the FPGA 35, and may output a signal indicating the detection result to the CPU 31. If it is determined, based on the signal output from the FPGA 36, that the image is a color image, the CPU 31 may display the image on the liquid crystal panel 10B in the FS method (S11). On the other hand, if it is determined that the image is a black-and-white image, the CPU 31 may display the image on the liquid crystal panel 10B in the alternative method (S23).

If it is determined that the ratio of areas having black color equal to or greater than the second threshold value Th2 (S33: YES), the CPU 31 may output, to the liquid crystal panel 10B, the signal for making the liquid crystal panel 10B display an image in the FS method (S35). That is, the CPU 31 may make a threshold value for determining whether to switch the displaying method from the FS method to the alternative method (the second threshold value Th2) and a threshold value for determining whether to switch the displaying method from the alternative method to the FS method (the third threshold value Th3) the same.

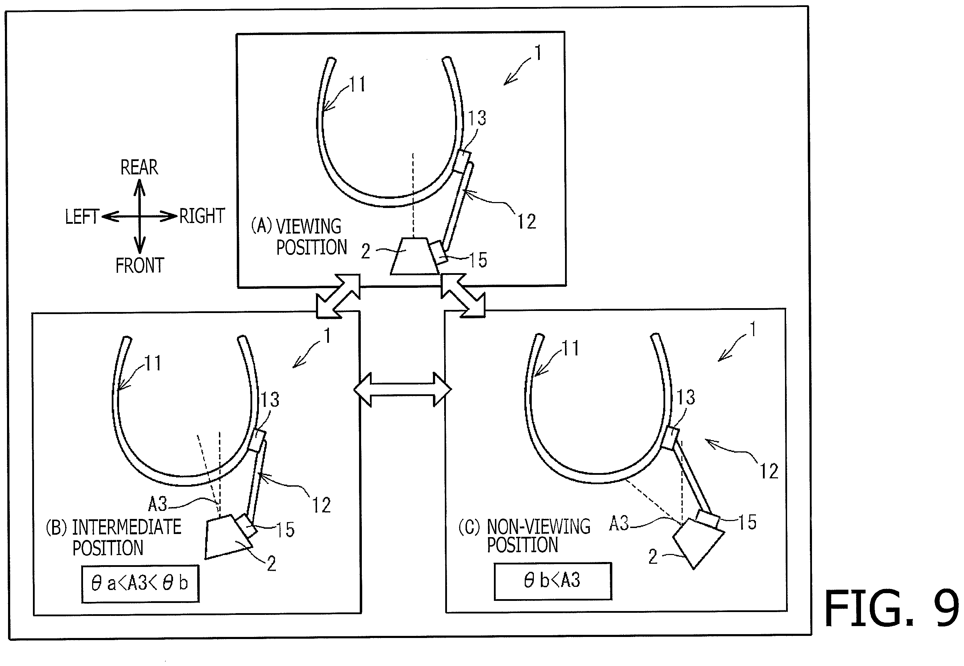

The intermediate position and the non-viewing position of the HD 2 are not limited to the cases defined by the third to fifth conditions (See Fig. 2.). Specific examples are as follows. As shown in Fig. 9(A), a position of the HD 2 at which a direction of image light emitted from the HD 2 faces rearward is defined as the viewing position, and the image light emitting direction in this case is defined as a "reference direction." Also, an angle between the emitting direction of the image light and the reference direction in a case where, when viewed from above, the HD 2 rotates counterclockwise from the viewing position is defined as a "third angle A3." The image light emitting direction faces obliquely rearward left (obliquely rearward right when viewed by the user). As shown in Fig. 9(B), the CPU 31 may determine that the position of the HD 2 is located at the intermediate position when the HD 2 is located at a position that satisfies a condition that the third angle A3 is greater than a predetermined angle *θ*a and is smaller than a predetermined angle *θ*b (*θ*a < A3 < *θ*b). Also, as shown in Fig. 9(C), the CPU 31 may determine that the HD 2 is located at the non-viewing position when the HD 2 is located at a position that satisfies a condition that the third angle A3 is greater than the angle *θ*b (*θ*b < A3).

The position of the HD 2 with respect to the mounting fixture 11 may be identified with methods other than the above-described one. For example, a camera capable of photographing the mounting fixture 11 may be provided to the HD 2. The CPU 31 may identify the positon of the HD 2 with respect to the mounting fixture 11 by analyzing the image photographed by the camera and thereby identifying the position of the mounting fixture 11.

If it is determined that the acceleration acting on the HD 2 is equal to or greater than the first threshold value Th1 (S13: YES), the CPU 31 may always display an image on the liquid crystal panel 10B in the alternative method (S23) regardless of the ratio of black color among the entire area of an image and/or the position of the HD 2 with respect to the mounting fixture 11.

If it is determined that the HD 2 is located at the viewing position (S29: YES), the CPU 31 may switch the displaying method of the liquid crystal panel 10B from the alternative method to the FS method, and if it is determined that the HD 2 is located at the non-viewing position (S27: YES), the CPU 31 may not switch the displaying method of the liquid crystal panel 10B and may keep the alternative method. The CPU 31 may identify an acceleration of the displacement of the visual line based on the signal output from the FPGA 34 (S41). If the identified acceleration is equal to or greater than a predetermined threshold value (S43: YES), the CPU 31 may display an image on the liquid crystal panel 10B in the alternative method (S45).

In executing the processes S27 and S29, the CPU 31 may make the determination based on the displacement amount of the visual line in place of the determination based on the position of the HD 2. That is, if the displacement amount of the visual line of the user is less than a predetermined threshold value (S27: YES, S29: YES), the CPU 31 may display an image on the liquid crystal panel 10B in the FS method.

In the above-described embodiment, the CPU 31 identifies the acceleration acting on the HD 2 based on the signals output from the acceleration sensor 38, and if it is determined that the identified acceleration is equal to or greater than the predetermined first threshold value Th1 (S13: YES), the CPU 31 changes the display method from the FS method to the alternative method. However, the CPU 31 may identify a parameter indicating an amount of movement of the HD 2 based on the signals output from the acceleration sensor 38. Examples of the parameter indicating the amount of movement include a displacement amount, a displacement velocity or the like of the HD 2. If it is determined that the identified parameter is equal to or greater than a predetermined threshold value, the CPU 31 may change the displaying method from the FS method to the alternative method. Also, for example, the HMD 1 may have a sensor (e.g., an angular velocity sensor or the like) capable of identifying the amount of movement of the HD 2 in place of the acceleration sensor 38.

### <Others>

The liquid crystal panel 10B is an example of the "display element" of the present disclosures. The HD 2 is an example of the "display part" of the present disclosures. The acceleration sensor 38 is an example of the "first detecting means" of the present disclosures. The FPGA 36 is an example of the "second detecting means" of the present disclosures. The FPGA 33 is an example of the "third detecting means" of the present disclosures. The FPGA 34 is an example of the "fourth detecting means" of the present disclosures. The CPU 31 executing the process S11 is an example of the "first control means" of the present disclosures. The CPU 31 executing the processes S23 and S45 is an example of the "second control means" of the present disclosures. The CPU 31 executing the processes S35 and S55 is an example of the "third control means" of the present disclosures. The CPU 31 executing the process S35 is an example of the "fourth control means" of the present disclosures. The CPU 31 executing the process S55 is an example of the "fifth control means" of the present disclosures.

### EXPLANATION OF REFERENCE SIGNS

- 1: : HMD
- 2: : display device
- 10B: : liquid crystal panel
- 11: : mounting fixture
- 12: : connection fixture
- 31: : CPU
- 33, 34, 35, 36: : FPGA
- 37, 38, 41: : acceleration sensor
- Th1: : first threshold value
- Th2: : second threshold value
- Th3: : third threshold value
- Th4: : fourth threshold value
- Th5: : fifth threshold value

## Claims

1. A head-mounted display, comprising:
a display part having a display element configured to display an image;
a mounting part for mounting the display part on a head of a user;
a first detecting means configured to detect a movement of the display part;
a first control means configured to make the display element display the image in a field sequential method if an amount of the movement detected by the first detecting means is less than a predetermined first threshold value; and
a second control means configured to make the display element display the image in an alternative method different from the field sequential method if the amount of the movement detected by the first detecting means is equal to or greater than the first threshold value.

2. The head-mounted display according to claim 1,
further comprising a second detecting means configured to detect a ratio of areas having black color among an entire area of the image displayed on the display element,
wherein if the amount of the movement detected by the first detecting means is equal to or greater than the first threshold value and the ratio detected by the second detecting means is equal to or greater than a predetermined second threshold value, the second control means makes the display element display the image in the alternative method.

3. The head-mounted display according to claim 2,
further comprising a third control means configured to make the display element display the image in the field sequential method if, after the image is displayed on the display element in the alternative method by the second control means, the ratio detected by the second detecting means becomes equal to or less than a third threshold value smaller than the second threshold value.

4. The head-mounted display according to any one of claims 1 to 3,
further comprising a third detecting means configured to detect a position of the display part with respect to the mounting part,
wherein the second control means specifies one of the field sequential method and the alternative method based on the position detected by the third detecting means and makes the display element display the image in the specified method.

5. The head-mounted display according to any one of claims 1 to 3,
further comprising a fourth detecting means configured to detect a displacement amount of a visual line of the user,
wherein if the displacement amount detected by the fourth detecting means is equal to or greater than a predetermined fourth threshold value, the second control means makes the display element display the image in the alternative method.

6. The head-mounted display according to claim 5,
further comprising a fifth control means configured to make the display element display the image in the field sequential method if, after the image is displayed on the display element in the alternative method by the second control means, the displacement amount detected by the fourth detecting means becomes less than a fifth threshold value smaller than the fourth threshold value.

7. The head-mounted display according to any one of claims 1 to 6,
wherein the field sequential method is a method in which RGB lights are output while being switched in a time division, and
wherein the alternative method is a method in which one of the RGB lights is output.

8. The head-mounted display according to any one of claims 1 to 6,
wherein the field sequential method is a method in which the RGB lights are output while being switched in a time division, and
wherein the alternative method is a method in which the RGB lights are output simultaneously.

9. A head-mounted display, comprising:
a display part having a display element configured to display an image;
a mounting part for mounting the display part on a user;
a first detecting means configured to detect a movement of the display part;
a first control means configured to make the display element display the image in a first method if an amount of the movement detected by the first detecting means is less than a predetermined first threshold value; and
a second control means configured to make the display element display the image in a second method different from the first method if the amount of the movement detected by the first detecting means is equal to or greater than the first threshold value,
wherein the first method is a method in which RGB lights are output while being switched in a time division in a first cycle, and
wherein the second method is a method in which the RGB lights are output while being switched in a time division in a second cycle shorter than the first cycle.
